# EUROPEAN PATENT SPECIFICATION

(11) **EP 3 520 896 B1**
(45) Date of publication and mention of the grant of the patent: **08.04.2020**
(21) Application number: 18154963.5
(22) Date of filing: 02.02.2018
(51) Int. Cl.: B01L 3/02, G01F 3/00, G01F 25/00

(54) **AUTOMATED VOLUMETRIC DEVICE**
AUTOMATISIERTE VOLUMETRISCHE VORRICHTUNG
DISPOSITIF VOLUMÉTRIQUE AUTOMATISÉ

(43) Date of publication of application: 07.08.2019
(73) Proprietor: Dispendix GmbH, 70563 Stuttgart (DE); Fraunhofer-Gesellschaft zur Förderung der angewandten Forschung e.V., 80686 München (DE)
(72) Inventor: FESTEL, Gunter, Bürgenstock 6363 Furigen (CH); BOELTZ, Harry, 71686 Remseck (DE); TRAUBE, Andreas, 72622 Nürtingen (DE); LASKE, Christopher, 70563 Stuttgart (DE); BRODE, Tobias, 73730 Esslingen am Neckar (DE)
(74) Representative: Schwahn, Hartmut

(56) References cited:
- DE-A1- 10 151 681
- US-A1- 2004 089 825
- US-A1- 2010 112 718
- US-A1- 2013 064 738
- US-B1- 7 414 255

## Description

The present invention concerns the technical field of volumetric measurement and volumetric instruments and provides novel devices and methods for the determination of the volume of a fluid.

A trend in biotechnology and chemistry is to use smaller and smaller amounts of liquid in order to use expensive substances effectively or to be able to carry out as many tests as possible from often limited sample quantities (volumes). Other trends include the automation and parallelization of experiments. Volumetric instruments should therefore deliver ever smaller volumes. In order to be able to precisely calibrate volumetric instruments, the test methods must be able to produce reliable results in these volume ranges.

Volumetric measurement is essential in the chemical or biological laboratory. In modern micro-scale applications, for example in microbiology, genetics or tissue engineering, there is a high demand for the dispensing of small volumes of liquids at high precision and accuracy. Furthermore, modern chemical and biological laboratory practice mainly relies on disposables such as vials, reaction cup or multiwell-plates, for the handling of fluids. Such disposables are generally not very accurate when used for determining the volume of a fluid contained therein. There is a need for single or repeated determination of the actual volume contained within such a disposable vessel. Furthermore, accurate volumetric measurements are essential for known techniques of quantitative chemical analysis, such as titration, and are useable in automated titration devices.

Common automated fluid dispensing devices, such as micro-pipettes and the like, need to be initially tested in production and then periodically calibrated to ensure precise dosing of fluids. In any case, measuring instruments have to be monitored to confirm the instruments' accuracy or to document measuring uncertainty. For example, in the medical and pharmaceutical field, for the manufacture and testing for medicinal products, but also for diagnostic uses there are regulations that calibration certificates are to be issued and conformity of calibration are issued on a periodic base. Relevant standards for the calibration of volumetric instruments are the ISO 8655 and IWA 15: 2015, where the ISO 8655 for manual volumetric instruments application, such as pipettes, and the IWA 15: 2015 for automatic devices.

The preferred method for volumetric calibration according to ISO 8655 is gravimetry, i.e. the determination of a volume of a liquid by means of weighing the liquid. Here, the volume is calculated from the density of the liquid and its weight. This method is the more difficult to perform and more prone to errors, the smaller the volumes to be determined. In addition to the environmental conditions, such as location, temperature, humidity, the evaporation has a significant impact on the measurement result. These parameters are partly included in the calculation. The gravimetric process is time consuming and difficult to automate. Automated devices where volumetry is performed by means of photometric methods are mostly given preference over the gravimetric method. The photometric method is better suited for automation. The volume is determined according to Lambert-Beer's law, i.e. calculated via the absorption of a known dye, the concentration and the thickness of the measuring cuvette. As with the gravimetric method, the volume is also indirectly determined here.

US7,414,255 describes a drop counter. US2013/0064738 describes a method and device for the metered addition of fluids into reaction vessels. US2010/0112718 describes a device for applying liquids on sample carriers.

There is a need for an improved volumetric device that can be automatically operated and is capable of measuring small laboratory scale fluid volumes with high accuracy and high reproducibility at high speed. Particularly, there is a need for an automated volumetric device that is capable of high -throughput and/or parallel measurement, in disposables and multiwell-plates.

The present invention solves the underlying technical problem by means of a device and method where defined sub-volumes, i.e. aliquots, are generated from the total fluid volume to be determined. These sub-volumes are either detected by a detector and counted or may be dispensed and printed in the form of an array on a sample carrier and the spots obtained on the carrier are counted. From the number of sub-volumes counted the original total volume of the fluid is calculated. Thus, the present invention advantageously allows for easy volumetric metering of an unknown volume of a fluid by dividing the total volume of the fluid into a plurality of basically uniform partial volumes of known, i.e. pre-determined, volume and to count the number of partials to derive the total volume of the fluid therefrom. The metering device of the present invention particularly takes advantage of a quantizing device capable of quickly and reliably forming uniform volume fractions of a total volume. The volumetric device of the present invention is primarily apt for fluids in laboratory scale, i.e. small, volumes, particularly in the range of 100 µL to 1 mL. which is present or is received in a small vessel, such as a vial or reaction cup. The volumetric device of the present invention is useable for biological cell and tissue culture applications and for micro-scale chemical reactions. The volumetric device is primarily useable for automated volumetry of total volumes of a fluid for use in automated determination of unknown volumes of fluids and/or for single or periodic testing and/or calibration of fluid dispensing or metering devices such as micro-pipettes or automated multi-channel dispensers.

In a first aspect, there is provided a volumetric device for the automated measurement of the total volume of a fluid. According to the invention the volumetric device comprises:
- a vessel for receiving the fluid, the vessel having an open top end for access to the fluid and a bottom tip for release of the fluid;
- a quantizing device, which is integrated into the bottom tip of the vessel, for receiving all fluid from the vessel and quantizing all fluid into a plurality of uniform partial volumes and repetitively releasing a plurality of droplets, each being of said uniform partial volume;
- a detector for individually detecting each droplet of the plurality of droplets released from the quantizing device; and
- a driver head attachable directly to the open top end of the vessel for repetitive application of individual pressure pulses onto the fluid contained in the vessel to each effect release of individual droplets, each of said uniform partial volume.
- a counter in signal-connection to the detector for counting each droplet event detected.

In particular, the device comprises at least one vessel, such as a fixed fluid receiver or an exchangeable or detachable disposable such as reaction tubes, vials, cups and multiwell-plates. This at least one vessel is specifically designed for receiving the fluid to be metered. The device may also provide at least one holder for receiving at least one of said exchangeable or detachable vessels which may receive or may already contain the fluid to be metered. According to the invention, the device comprises at least one quantizing device which is integrated within the at least one vessel to receive all fluid from the vessel and to quantize all of the fluid into a plurality of uniform partial volumes, i.e. aliquots of the total volume of the fluid. This quantizing device is further characterized in that it is capable of repetitively releasing a plurality of droplets, wherein each droplet contains said uniform partial volume from said total volume to be determined. The device further comprises at least one detector or an arrangement of detectors for individually detecting each droplet of the plurality of droplets released from the quantizing device, and it further comprises a counter which is in signal-connection to the at least one detector for counting each droplet event detected by said detector.

Basically, the accuracy of the volumetric measurement depends on the size of the partial volume, i.e. aliquot, generated by the quantizing device. The time necessary to perform the volumetric measurement primarily depends on the frequency the quantizing device to form partial volumes from the total volume of the fluid.

In particular, the quantizing device is a capillary valve, comprising at least one capillary to hold the fluid within the capillary by means of cohesive and adhesive forces with the fluid and at the interface between the capillary wall and the fluid. The capillary valve is normally closed in that it does not lead the fluid through the capillary when no pressure is applied to the fluid. For example, in a gravity-fed system, the fluid rests above the capillary valve, but the hydrostatic pressure at the site of the capillary does not exceed the resistance to flow within the capillary and thus, the fluid does not flow through the capillary. By applying additional pressure to the fluid on the capillary, the resistance to flow is overcome and the fluid flows through the capillary as long as this additional pressure is maintained. Hence, the capillary valve can be opened by applying additional pressure, primarily in the form of one or more pulses of pressure, to the fluid at the capillary and thereby driving portions of the fluid, in particular, one or more droplets of the fluid through the capillary valve, each time the fluid pressure exceeds a certain level. In a particular embodiment, each pressure pulse applied to the fluid results in the release of a single droplet of uniform partial volume of the fluid. Alternatively, more than one pressure pulse is applied in series or in a burst to effect the release of a single droplet of said partial volume.

The amount of the uniform partial volume of each droplet, i.e. aliquot, can be pre-determined by selection of the dimensions of the capillary, but is also dependent on the molecular and electronic forces at the interface between the walls of the capillary and the fluid, and is also dependent on the viscosity of the fluid. The amount of the uniform partial can also be pre-determined by selection of the characteristics, i.e. time course and/or amplitude, of the one or more pressure pulse applied. Typical partial volumes range from about 1 nL to about 100 nL, which is about from 1/100 to 1/10.000 of the expected total volume of the fluid to be determined.

According to the invention, the vessel contained or received in the volumetric device of the present invention has an open top side for providing access to the fluid contained therein and a bottom tip for the release of the fluid. The bottom tip comprises or consists of the quantizing device, which preferably is in the form of a capillary valve. Accordingly, the capillary valve is integrated into the bottom tip of the vessel. A particular embodiment thereof, the vessel is a disposable vial or reaction cup or a multiwell-plate where in the bottom tip at least one capillary is formed. In this particular embodiment, the vessel with the integrated capillary valve form a dispensing nozzle and thus the basic elements of the quantizing device. In this embodiment, the quantizing device is substantially comprised of the vessel as such and the capillary valve formed in the bottom tip of the vessel. To complete the functional element of the quantizing device, a pressure generator, more particular a pulse generator, is present. The embodiment thereof according to the invention is described in the following.

According to the invention, the volumetric device further comprises a driver head which is attachable to the vessel, in particular to the open top end of the vessel. The driver head is specifically designed for rapid application of individual pressure pulses onto the fluid contained in the vessel. Particularly, once the vessel receives the fluid to be measured and/or the vessel containing the fluid is received in the holder of the device, the driver head can swivel over the vessel and can be brought in connection to the vessel to seal the volume of the vessel for applying pressure pulses onto the fluid contained in the vessel. In a preferred embodiment, the driver head comprises at least one pressure driver to generate one or more pulses of increased pressure, which is selected from electromagnetic or electrodynamic or piezo-electric membrane pumps and from a valve or valve assembly that is operable to temporarily connect to a pressure accumulator tank.

In preferred embodiments, the droplet detector is selected from the group consisting of: light detectors, photoelectric barriers, capacitive sensors and piezoelectric sensors and combinations of any two or three thereof.

In a particular embodiment, the volumetric device of the present invention further comprises a receiver vessel for receiving the plurality of droplets released from the quantizing device. In a preferred variant thereof, the receiver vessel is detachable from the device.

In a particular embodiment, the volumetric device of the present invention further comprises a microcontroller, that is programmed to calculate the total volume of the fluid from the total number of droplets of partial volume, given the predetermined partial volume of each droplet.

In a second aspect, there is provided a method of determining the total volume of a fluid , the method comprising the step (a): receiving the fluid to be metered in a vessel, and step (b): emptying and concomitantly, i.e. at the same time and instance, quantizing all of said total volume from the vessel by repeated action, thus to produce a plurality of droplets of uniform partial volume (aliquot), until all volume of fluid (10) is released. In step (b) the fluid is quantized into the plurality of uniform partial volumes by means of repeated micro-dosing steps, each micro-dosing step yielding one quantum of said partial volume. In step (c) each of said droplets is individually detecting and counting as it is released in step (b) or afterwards. In step (d) the total volume of the fluid is automatically calculated from the total number of all droplets that have been dosed, released, detected and counted during steps (b) and (c).

Accordingly, the uniform partial volume is the volume of one droplet. One droplet may have a volume of 5 nL to 50 nL. A typical and preferred droplet volume is about 10 nL. Accordingly, the uniform partial volume is the volume of one droplet. The total volume of the fluid, i.e. liquid, to be determined typically ranges from about 1 mL to 100 µL. Thus it is preferred that the uniform partial volume, i.e. the droplet volume, ranges is from 1/10.000 to 1/1.000.000, more particularly from 1/100.000 to 1/1.000.000, of the expected total volume of the fluid to be measured.

According to the invention, the fluid is quantized in step (b) by repeated dosing steps, wherein each one dosing step includes the step (b1): to apply one or more pressure pulse to the fluid, and step (b2): to thus drive a fraction of said fluid through a capillary valve, which is integrated into the vessel, preferably in the bottom tip of the vessel, to produce one droplet of said uniform partial volume.

Particularly, step (c) includes step (c1): detecting the incidence of a droplet released in step (b) and counting each incidence, and step (c2): determining the individual speed of each droplet released in step (b). Particularly, step (d) includes step (d1): automatically calculating the actual individual volume of each detected droplet from the individual speed of said droplet, and step (d2): automatically calculating the total volume of the fluid from the total number of droplets detected in step (c) and from the actual individual volumes of the droplets calculated in step (d1).

Alternatively preferred, step (c) includes step (c3): receiving all volume of each droplet (11) released in step (b) on a movable surface or carrier, and step (c4) controlled moving of the surface after each droplet (11) received so as to generate an array of stains, each stain being preferably located at a predetermined array position on said surface, and step (c5): automatically analyzing a two-dimensional profile of light density or light transmission of said array if stains to count the stains and thus to determine the total number of droplets released and/or to determine the size of each stain and thus to determine the actual individual volume of the droplets released.

By that the individual volume of each droplet dispensed can be determined, which increases the precision of the measurement over the mere assumption that each droplet has the same uniform partial volume by about 10 times. More particularly, the predetermined uniform partial volume determines the range or order of magnitude of the aliquot or quantum only. The determination of the actual individual volume of each droplet allows an individual adaptation of the size of each quantum in terms of fractions of each quantum and thereby allows for a more precise measurement.

In a third aspect, the present invention provides the use of the volumetric device of the invention for the purpose of single or periodic volume calibration of fluid dispensing metering devices.

The present invention and particular embodiments thereof are explained in more detail in the following:
The device may comprise of the following components: a compressed air device with preset pressure-stable air (at least 3 MPa), a driver head, containing the pressure pulse generator connected to the air device, the driver head can be bent upwards and away from the vessel into a resting non-operating state, a sealing and management of the pressure pulse, a pressure-pulse driven dispensing nozzle, a detection device for detecting the drops, a waste container to catch the released drops.

The quantizing device may consist of a dosing nozzle in particular a conical vessel with a precisely made capillary opening in the bottom. The opening is circular and preferably has a diameter of 60 µm. Due to the capillary action in the opening, a liquid with appropriate surface tension cannot flow through the opening under balanced pressure conditions. The pressure pulse generator is preferably designed as a 3/2-way valve with a quick-switching function. In the switched-off state, the space above the liquid of the metering nozzle is connected to the environment and the pressure conditions are balanced. By means of a short (500 to 1000 ms) closure of the valve, the space is connected to the applied compressed air and it flows compressed air from the upstream compressed air device through the valve. Since the valve is switched only briefly and the space above the metering nozzle is directly switched back to the environment, the short switching creates a pressure pulse wave, which is introduced from the valve into the vessel of the vessel and nozzle of the quantizing device. The liquid in the dosing nozzle receives a shock from the pressure wave, the capillary force in the nozzle tip is overcome and a drop is metered from the nozzle, i.e. the vessel comprising the nozzle. The opening in the bottom of the vessel thus has the function of a threshold valve. With clearly defined preconditions: liquid properties, length of the pressure wave, height of the applied pre-pressure, etc., the volume of the drop is highly accurate and reproducible. Repeated application of the pressure wave repeated drops are delivered.

By a conical inlet of the metering nozzle to the bottom opening and by hydrophobic surface properties in the interior of the metering nozzle, this can be completely emptied in the way. The total volume filled can thus be divided into a defined number of small drops. For a high precision, a very high accuracy of the metering nozzle opening is required.

The ideal metering nozzle is therefore constructed so that the body of the vessel is made of plastic. In the bottom of the vessel is a silicon wafer, which is injection-molded by injection molding. In the middle of the plate is the hole with the appropriate diameter. In silicon, the hole can be made with high precision etching. The ideal dosing liquid optimally flows from above into the capillary, so that the dosing nozzle can be completely emptied.

In order to support this, it may be advantageous if the liquid 1 is covered with a second liquid. The liquid 2 can therefore not mix with liquid 2 and has a lower density, so it floats on top. By this effect, the upper liquid acts as a flexible cylinder, which presses the liquid to be measured 1 in the direction of metering. So it is ensured that liquid 1 can be completely printed until only liquid 2 is present in the well.

The dosing nozzle i.e. the vessel can be intended for single use. To allow the nozzle to be refilled, the metering nozzle can be removed from the device. For this purpose, a movable drawer device with a holder is preferably provided. The drawer device may receive the vessel or nozzle as well as the waste container and the detection device. These parts thus can be easily removed from the device. To accomplish this, the vessel and dosing nozzle are disconnectible from the pressure pulse generator. The pressure pulse generator is located in a driver head that can lift up or fold away. In a preferred embodiment, the driver head is suspended on a hinge which is preferably located at the rear of the actual device. The driver head's arm may be hinged about a spring. In operation, the driver head with the pressure pulse generator is pressed in the closed state by gravity and/or spring tension onto the top side of the vessel and seals it by a sealing ring, which sits flush on the upper edge of the vessel. In the resting phase, the driver head is pushed upwards and held by means of an electromagnet arranged below. The seal is separated from the vessel and the drawer can be moved out to the front of the device. When the drawer is moved out, both the vessel and nozzle and the waste container can be exchanged.

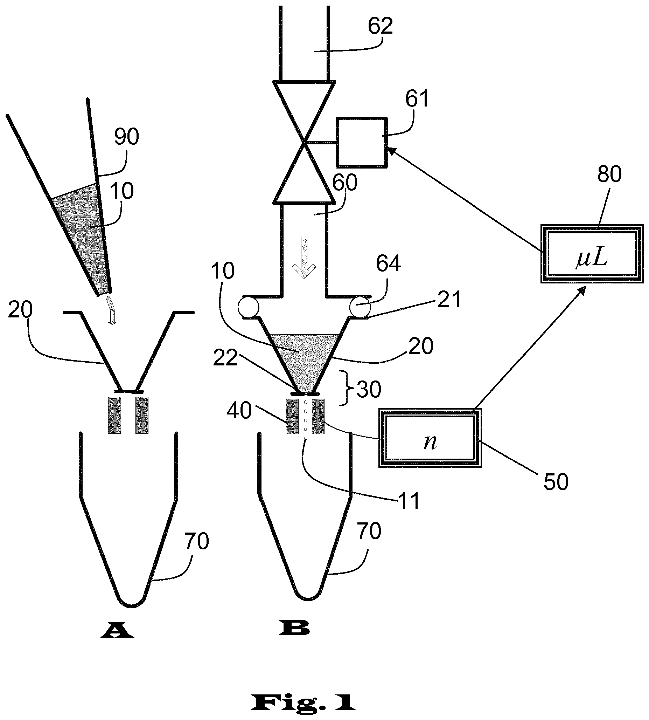

Figure 1 schematically depicts two phases of operation of the volumetric device of the present invention. In initial phase A, a fluid, i.e. liquid (10) of unknown volume is dispensed from the tip (90) of a pipette or metering device to be calibrated into the receiving vessel (20) of the device. In phase B, a driver head (60) is placed over the vessel (20) to seal the open top (21) of the vessel (20), optionally via seal (64). A microcontroller (80) controls valve (61) of the driver head (60) to temporarily and repeatedly apply pulses of increased pressure provided in pressure line (62) onto the fluid (10) received in vessel (20). At the bottom tip (22) of the vessel (20) a capillary is formed which functions as a capillary valve. The vessel (20) together with the capillary valve in the bottom tip (22) is operable as a dosing nozzle to release single droplets (11) of fluid (10) of uniform partial volume upon provision of pressure pulses through the driver head (60). A detector (40) is located immediately adjacent to the bottom tip (22) of the vessel (20) to detect each droplet (11) leaving the capillary valve. The detector (40) is connected to a counter (50) to count the number of detection events, i.e. the droplets. The counter (50), in turn, is connected to the microcontroller (80), which is programmed to calculate the actual total volume of the fluid (10) originally received in vessel (20) from the number of droplets (11).

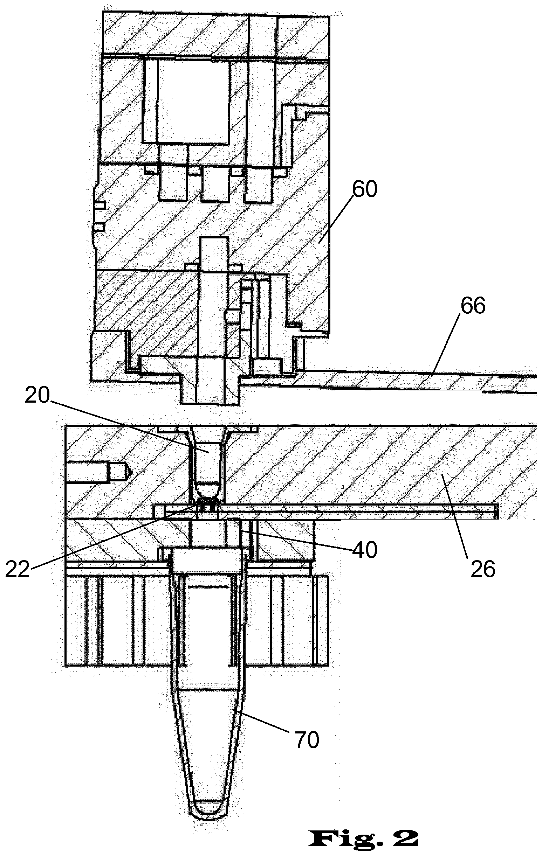

Figure 2 shows a schematic drawing of a section of basic parts of a specific embodiment of the volumetric device of the present invention: A driver head (60) is placed on the end of a swivel arm (66), a slidable tray or holder (26) receives a vessel (20) which comprises a capillary valve at the bottom tip (22). Adjacent to the bottom tip (22) of the vessel 20 a droplet detector (40) is located. In a separate holder, a receiver vessel (70) for receiving liquid dripping out of the vessel (20) is installed.

## Claims

1. A volumetric device for the automated measurement of the total volume of a fluid (10) comprising:
- a vessel (20) for receiving the fluid (10), the vessel (20) having an open top end (21) for access to the fluid (10) and a bottom tip (22) for release of the fluid (10);
- a quantizing device (30), which is integrated into the bottom tip (22) of the vessel (20) for receiving all fluid (10) from the vessel (20) and quantizing all fluid (10) into a plurality of uniform partial volumes and repetitively releasing a plurality of droplets (11), each of said uniform partial volume;
- a detector (40) for individually detecting each droplet (11) of the plurality of droplets released from the quantizing device (30); and
- a counter (50) in signal-connection to the detector (40) for counting each droplet event detected;
**characterized in that** the volumetric device further comprises:
- a driver head (60) attachable directly to the open top end (21) of the vessel (20) for repetitive application of individual pressure pulses onto the fluid (10) contained in the vessel (20) to each effect release of individual droplets (11), each of said uniform partial volume.

2. The device of claim 1, wherein the quantizing device (30) is a capillary valve (32) normally closed and drivable to open by individual pressure pulses applicable to the fluid (10), thereby releasing each one droplet (11) of uniform partial volume upon one or more pressure pulse applied.

3. The volumetric device of any one of the preceding claims, wherein the droplet detector (40) is selected from the group consisting of: light detectors, photoelectric barriers, capacitive sensors and piezoelectric sensors and combinations of any two or three thereof.

4. The volumetric device of any one of the preceding claims, further comprising:
- a receiver vessel (70) for receiving the plurality of droplets (11) released from the from the quantizing device (30), the receiver vessel (70) optionally being detachable from the volumetric device.

5. The volumetric device of any one of the preceding claims, further comprising:
- a microcontroller (80), programmed to calculate the total volume of the fluid (10) from the total number of droplets (11) of partial volume of said fluid, given the predetermined partial volume of each droplet (11).

6. The volumetric device of any one of the preceding claims, wherein the vessel (20) is in the form of a disposable container, selected from the group comprising reaction tubes, vials, cups and multiwell-plates, and which comprises a capillary valve (32) that is integrated into the bottom tip (22) of the vessel (20).

7. A method of volumetric measurement of the total volume of a fluid (10), comprising the steps of:
a) receiving the fluid (10) to be metered in a vessel (20);
b) emptying and concomitantly quantizing all of said fluid (10) from the vessel (20) repeatedly to produce and release a plurality of droplets (11) of uniform partial volume until all volume of fluid (10) is released, wherein the fluid (10) is quantized into the plurality of uniform partial volumes by means of repeated dosing steps, each dosing step yielding one quantum of said partial volume and wherein each one dosing step includes the steps of:
b1) applying one or more pressure pulse to the fluid (10) and thus
b2) driving a fraction of said fluid (10) through a capillary valve (32), which is integrated into the bottom tip (22) of the vessel (20), to produce one droplet (11) of said uniform partial volume;
c) individually detecting and counting each of said droplets (11) released in step (b); and
d) automatically calculating the total volume of the fluid (10) from the total number of all droplets (11) that have been dosed, released, detected and counted during steps (b) and (c).

8. The method of claim 7 , wherein step (c) includes the steps of:
c1) detecting the incidence of a droplet released in step (b) and counting each incidence, and
c2) determining the individual speed of each droplet released in step (b);
and wherein step (d) includes the steps of:
d1) automatically calculating the actual individual volume of each detected droplet (11) from the individual speed of said droplet (11), and
d2) automatically calculating the total volume of the fluid (10) from the total number of droplets (11) detected in step (c) and from the actual individual volumes of the droplets (11) calculated in step (d1).

9. The method of of claim 7 or 8, wherein step (c) includes the steps of:
c3) receiving all volume of each droplet (11) released in step (b) on a movable surface (90),
c4) controlled moving of the surface (90) after each droplet (11) received so as to generate an array of stains (92), each stain preferably located at a predetermined array position on said surface (90), and
c5) automatically analyzing a two-dimensional profile of light density or light transmission of said array of stains (92) to count the stains and thus to determine the total number of droplets (11) released and/or to determine the size of each stain and thus to determine the actual individual volume of the droplets (11) released.

10. Use of the volumetric device of any one of claims 1 to 6 for single or periodic volume calibration of a fluid dispensing metering device.

## Patentansprüche

1. Volumetrische Vorrichtung zur automatisierten Messung des Gesamtvolumens eines Fluids (10), umfassend:
- einen Behälter (20) zur Aufnahme des Fluids (10), wobei der Behälter (20) ein offenes oberes Ende (21) für den Zugang zu dem Fluid (10) und eine untere Spitze (22) zur Abgabe des Fluids (10) aufweist;
- eine Quantisierungsvorrichtung (30), die in die untere Spitze (22) des Behälters (20) integriert ist, um das gesamte Fluid (10) aus dem Behälter (20) aufzunehmen und das gesamte Fluid (10) in mehrere gleichmäßige Teilvolumen zu quantisieren und wiederholt mehrere Tröpfchen (11) freizusetzen, die jeweils das gleichmäßige Teilvolumen haben;
- einen Detektor (40) zum individuellen Detektieren jedes Tröpfchens (11) der mehreren Tröpfchen, die von der Quantisierungsvorrichtung (30) freigesetzt werden; und
- einen Zähler (50) in Signalverbindung mit dem Detektor (40) zum Zählen jedes detektierten Tröpfchenereignisses;
**dadurch gekennzeichnet, dass** die volumetrische Vorrichtung des Weiteren Folgendes umfasst:
- einen Antriebskopf (60), der direkt an dem offenen oberen Ende (21) des Behälters (20) angebracht werden kann, um wiederholt individuelle Druckimpulse auf das in dem Behälter (20) enthaltene Fluid (10) auszuüben, um jeweils eine Freisetzung einzelner Tröpfchen (11) zu bewirken, die jeweils das gleichmäßige Teilvolumen haben.

2. Vorrichtung nach Anspruch 1, wobei die Quantisierungsvorrichtung (30) ein Kapillarventil (32) ist, welches normalerweise geschlossen ist und das durch individuelle Druckimpulse, die auf das Fluid (10) ausgeübt werden können, zum Öffnen veranlasst werden kann, wodurch jedes einzelne Tröpfchen (11) mit gleichmäßigem Teilvolumen bei einem oder mehreren angelegten Druckimpulsen freigesetzt wird.

3. Volumetrische Vorrichtung nach einem der vorhergehenden Ansprüche, wobei der Tröpfchendetektor (40) ausgewählt ist aus der Gruppe bestehend aus: Lichtdetektoren, photoelektrischen Schranken, kapazitiven Sensoren und piezoelektrischen Sensoren und Kombinationen von zwei oder drei davon.

4. Volumetrische Vorrichtung nach einem der vorhergehenden Ansprüche, des Weiteren umfassend:
- einen Aufnahmebehälter (70) zum Aufnehmen der mehreren Tröpfchen (11), die von der von der Quantisierungsvorrichtung (30) freigesetzt werden, wobei der Aufnahmebehälter (70) optional von der volumetrischen Vorrichtung abgenommen werden kann.

5. Volumetrische Vorrichtung nach einem der vorhergehenden Ansprüche, des Weiteren umfassend:
- einen Mikrocontroller (80), der dafür programmiert ist, das Gesamtvolumen des Fluids (10) aus der Gesamtzahl der Tröpfchen (11) mit dem Teilvolumen des Fluids, die jeweils das zuvor festgelegte Teilvolumen jedes Tröpfchens (11) aufweisen, zu berechnen.

6. Volumetrische Vorrichtung nach einem der vorhergehenden Ansprüche, wobei der Behälter (20) in Form eines Einwegbehälters vorliegt, der aus der Gruppe bestehend aus Reagenzröhrchen, Fläschchen, Becher und Mehrmuldenplatten ausgewählt ist, und der ein Kapillarventil (32) umfasst, das in die untere Spitze (22) des Behälters (20) integriert ist.

7. Verfahren zur volumetrischen Messung des Gesamtvolumens eines Fluids (10), umfassend folgende Schritte:
a) Aufnehmen des zu messenden Fluids (10) in einem Behälter (20);
b) wiederholtes Entleeren und gleichzeitiges Quantisieren des gesamten Fluids (10) aus dem Behälter (20), um mehrere Tröpfchen (11) mit gleichmäßigem Teilvolumen zu erzeugen und freizusetzen, bis das gesamte Volumen des Fluids (10) freigesetzt wurde, wobei das Fluid (10) mittels wiederholter Dosierschritte in die mehreren gleichförmigen Teilvolumen quantisiert wird, wobei jeder Dosierschritt ein einzelnes Quantum des Teilvolumens ergibt und wobei jeder einzelne Dosierschritt die folgenden Schritte beinhaltet:
b1) Anwenden eines oder mehrerer Druckimpulse auf das Fluid (10) und somit
b2) Treiben eines Bruchteils des Fluids (10) durch ein Kapillarventil (32), das in die untere Spitze (22) des Behälters (20) integriert ist, um ein einzelnes Tröpfchen (11) des gleichmäßigen Teilvolumens zu erzeugen;
c) individuelles Detektieren und Zählen jedes der in Schritt (b) freigesetzten Tröpfchen (11); und
d) automatisches Berechnen des Gesamtvolumens des Fluids (10) aus der Gesamtzahl aller Tröpfchen (11), die während der Schritte (b) und (c) dosiert, freigesetzt, detektiert und gezählt worden sind.

8. Verfahren nach Anspruch 7, wobei Schritt (c) folgende Schritte umfasst:
c1) Detektieren des Auftretens eines in Schritt (b) freigesetzten Tröpfchens und Zählen jedes Auftretens und
c2) Bestimmen der individuellen Geschwindigkeit jedes in Schritt (b) freigesetzten Tröpfchens; und
wobei Schritt (d) folgende Schritte beinhaltet:
d1) automatisches Berechnen des tatsächlichen individuellen Volumens jedes detektierten Tröpfchens (11) anhand der individuellen Geschwindigkeit des Tröpfchens (11) und
d2) automatisches Berechnen des gesamten Volumens des Fluids (10) anhand der Gesamtzahl der in Schritt (c) detektierten Tröpfchen (11) und anhand der tatsächlichen individuellen Volumen der in Schritt (d1) berechneten Tröpfchen (11).

9. Verfahren nach Anspruch 7 oder 8, wobei Schritt (c) folgende Schritte beinhaltet:
c3) Aufnehmen des gesamten Volumens jedes in Schritt (b) freigesetzten Tröpfchens (11) auf einer beweglichen Oberfläche (90),
c4) kontrolliertes Bewegen der Oberfläche (90) nach jedem aufgenommenen Tröpfchen (11), um eine Anordnung von Flecken (92) zu erzeugen, wobei jeder Fleck bevorzugt an einer zuvor festgelegten Anordnungsposition auf der Oberfläche (90) angeordnet ist, und
c5) automatisches Analysieren eines zweidimensionalen Profils der Lichtdichte oder Lichtdurchlässigkeit der Anordnung von Flecken (92), um die Flecken zu zählen und somit die Gesamtzahl der freigesetzten Tröpfchen (11) zu bestimmen und/oder die Größe jedes Flecks zu bestimmen und somit das tatsächliche individuelle Volumen der freigesetzten Tröpfchen (11) zu bestimmen.

10. Verwendung der volumetrischen Vorrichtung nach einem der Ansprüche 1 bis 6 zur einmaligen oder periodischen Volumenkalibrierung einer Flüssigkeitsabgabe-Messvorrichtung.

## Revendications

1. Dispositif volumétrique destiné à la mesure automatisée du volume total d'un fluide (10), comprenant :
- un récipient (20) destiné à recevoir le fluide (10), le récipient (20) présentant une extrémité supérieure ouverte (21) d'accès au fluide (10) et un embout inférieur (22) de libération de fluide (10) ;
- un dispositif de quantication (30) qui est intégré à l'embout inférieur (22) du récipient (20) pour recevoir la totalité du fluide (10) en provenance du récipient (20) et quantifier la totalité du fluide (10) en une pluralité de volumes partiels uniformes et libérer de façon répétitive une pluralité de gouttelettes (11), chacune étant dudit volume partiel uniforme ;
- un détecteur (40) destiné à détecter individuellement chaque gouttelette (11) de la pluralité de gouttelettes libérées par le dispositif de quantication (30) ; et
- un compteur (50) en communication par signaux avec le détecteur (40) pour compter chaque événement de gouttelette détecté ;
**caractérisé en ce que** le dispositif volumétrique comprend en outre :
- une tête d'entraînement (60) pouvant être fixée directement à l'extrémité supérieure ouverte (21) du récipient (20) à des fins d'application répétitive d'impulsions de pression individuelles au fluide (10) contenu dans le récipient (20), devant réaliser chacune la libération de gouttelettes individuelles (11), chacune étant dudit volume partiel uniforme.

2. Dispositif selon la revendication 1, dans lequel le dispositif de quantication (30) est une vanne capillaire (32) normalement fermée et pouvant être entraînée pour s'ouvrir sous l'effet d'impulsions de pression individuelles applicables au fluide (10), ce qui permet de libérer chacune des gouttelettes (11) de volume partiel uniforme dès qu'une ou plusieurs impulsion(s) de pression est ou sont appliquée(s).

3. Dispositif volumétrique selon l'une quelconque des revendications précédentes, dans lequel le détecteur de gouttelettes (40) est choisi dans le groupe composé de : détecteurs de lumière, barrières photoélectriques, capteurs capacitifs et capteurs piézoélectriques ainsi que des combinaisons de deux ou trois quelconques de ceux-ci.

4. Dispositif volumétrique selon l'une quelconque des revendications précédentes, comprenant en outre :
- un récipient de réception (70) destiné à recevoir la pluralité de gouttelettes (11) libérées par le par le dispositif de quantication (30), le récipient de réception (70) étant éventuellement détachable du dispositif volumétrique.

5. Dispositif volumétrique selon l'une quelconque des revendications précédentes, comprenant en outre :
- un microcontrôleur (80) programmé pour calculer le volume total du fluide (10) d'après le nombre total de gouttelettes (11) de volume partiel dudit fluide, compte tenu du volume partiel prédéterminé de chaque gouttelette (11).

6. Dispositif volumétrique selon l'une quelconque des revendications précédentes, dans lequel le récipient (20) se présente sous la forme d'un récipient à usage unique, choisi dans le groupe comprenant des tubes à réaction, des flacons, des coupelles et des plaques multipuits, et qui comprend une vanne capillaire (32) qui est intégrée à l'embout inférieur (22) du récipient (20).

7. Procédé de mesure volumétrique du volume total d'un fluide (10), comprenant les étapes consistant à :
a) recevoir le fluide (10) à mesurer, dans un récipient (20) ;
b) vider et quantifier de manière concomitante la totalité dudit fluide (10) provenant du récipient (20) de façon répétée pour produire et libérer une pluralité de gouttelettes (11) de volume partiel uniforme jusqu'à ce que la totalité du volume de fluide (10) soit libérée, dans lequel le fluide (10) est quantifié en la pluralité de volumes partiels uniformes au moyen d'étapes de dosage répétées, chaque étape de dosage donnant un quantum dudit volume partiel et dans lequel chaque étape de dosage inclut les étapes consistant à :
b1) appliquer une ou plusieurs impulsion(s) de pression au fluide (10) et ainsi
b2) entraîner une fraction dudit fluide (10) à travers une vanne capillaire (32) qui est intégrée à l'embout inférieur (22) du récipient (20), pour produire une gouttelette (11) dudit volume partiel uniforme ;
c) détecter individuellement et compter chacune desdites gouttelettes (11) libérées à l'étape (b) ; et
d) calculer automatiquement le volume total du fluide (10) d'après le nombre total de toutes les gouttelettes (11) qui ont été dosées, libérées, détectées et comptées au cours des étapes (b) et (c).

8. Procédé selon la revendication 7, dans lequel l'étape (c) inclut les étapes consistant à :
c1) détecter l'occurrence d'une gouttelette libérée à l'étape (b) et compter chaque occurrence, et
c2) déterminer la vitesse individuelle de chaque gouttelette libérée à l'étape (b) ;
et dans lequel étape (d) inclut les étapes consistant à :
d1) calculer automatiquement le volume individuel réel de chaque gouttelette détectée (11) d'après la vitesse individuelle de ladite gouttelette (11), et
d2) calculer automatiquement le volume total du fluide (10) d'après le nombre total de gouttelettes (11) détectées à l'étape (c) et d'après les volumes individuels réels des gouttelettes (11) calculés à l'étape (d1).

9. Procédé selon la revendication 7 ou 8, dans lequel l'étape (c) inclut les étapes consistant à :
c3) recevoir la totalité du volume de chaque gouttelette (11) libérée à l'étape (b) sur une surface mobile (90),
c4) déplacer de manière contrôlée la surface (90) après chaque gouttelette (11) reçue, de manière à produire un réseau de taches (92), chaque tache étant située de préférence à une position prédéterminée du réseau sur ladite surface (90), et
c5) analyser automatiquement un profil en deux dimensions de densité lumineuse ou de transmission lumineuse dudit réseau de taches (92) pour compter les taches et pour déterminer ainsi le nombre total de gouttelettes (11) libérées et/ou pour déterminer la taille de chaque tache et pour déterminer ainsi le volume individuel réel des gouttelettes (11) libérées.

10. Utilisation du dispositif volumétrique selon l'une quelconque des revendications 1 à 6 à des fins d'étalonnage volumétrique unique ou périodique d'un dispositif de mesure et de distribution de fluide.
